(19)

Europäisches
Patentamt

European
Patent Office

Office européen
des brevets

(11) **EP 4 379 863 A1**

(12) **EUROPEAN PATENT APPLICATION**
published in accordance with Art. 153(4) EPC

(43) Date of publication:
**05.06.2024 Bulletin 2024/23**

(21) Application number: **22849160.1**

(22) Date of filing: **30.06.2022**

(51) International Patent Classification (IPC):
**H01M 4/48** *(2010.01)*        **H01M 4/36** *(2006.01)*

(52) Cooperative Patent Classification (CPC):
**H01M 4/36; H01M 4/48;** Y02E 60/10

(86) International application number:
**PCT/JP2022/026370**

(87) International publication number:
**WO 2023/008093 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **27.07.2021   JP 2021122790**

(71) Applicant: SHIN-ETSU CHEMICAL CO., LTD.
**Tokyo 1000005 (JP)**

(72) Inventors:
• **HIROSE Takakazu**
  **Annaka-shi, Gunma 379-0125 (JP)**
• **MATSUNO Takumi**
  **Annaka-shi, Gunma 379-0125 (JP)**
• **OSAWA Yusuke**
  **Annaka-shi, Gunma 379-0125 (JP)**
• **SAKAI Reiko**
  **Annaka-shi, Gunma 379-0125 (JP)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **NEGATIVE ELECTRODE ACTIVE MATERIAL AND METHOD FOR PRODUCING SAME**

(57)    The present invention is a negative electrode active material including negative electrode active material particles, wherein the negative electrode active material particles contain silicon oxide particles coated with a carbon layer, and the silicon oxide particles contain $Li_2SiO_3$, and a Si2p spectrum obtained by XPS analysis has a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A. This provides a negative electrode active material that can increase a battery capacity with improvement of initial efficiency and that can achieve sufficient battery cycle characteristics.

[FIG. 1]

EP 4 379 863 A1

**Description**

TECHNICAL FIELD

The present invention relates to a negative electrode active material and a method for manufacturing the same.

BACKGROUND ART

Small-sized electronic devices represented by mobile terminals have been widespread in recent years, and further miniaturizing, lightweight property, and longer lifetime are strongly demanded. For such market demands, in particular, development of small-sized and lightweight secondary batteries that can yield a high energy density is in progress. It is investigated that this secondary battery is applied for not only the small-sized electronic devices but also large-sized electronic devices represented by automobiles and for power storage systems represented by houses.

Among these, a lithium-ion secondary battery has been promising because the lithium-ion secondary battery has a small size, easily has an increased capacity, and can yield a higher energy density than a lead battery and a nickelcadmium battery.

The above lithium-ion secondary battery has a positive electrode, a negative electrode, a separator, and an electrolyte liquid, and the negative electrode contains a negative electrode active material, which is involved with charge-discharge reactions.

For this negative electrode active material, a carbon-based active material is widely used, and meanwhile, the recent market demands have required further increase in a battery capacity. For increasing the battery capacity, use of silicon as a material for the negative electrode active material is investigated. This is because a theoretical capacity of silicon (4199 mAh/g) is ten times or more higher than a theoretical capacity of graphite (372 mAh/g), and thereby remarkable increase in the battery capacity is expected. Development of the silicon material as the material for the negative electrode active material is investigated on not only a silicon single substance but also compounds, etc. represented by an alloy and an oxide. A form of the active material is investigated from an applying type, which is standard in the carbon-based active material, to an integrated type in which the active material is directly deposited on a current collector.

However, use of silicon as a main raw material of the negative electrode active material causes the negative electrode active material to expand and contract during charge and discharge, easily leading to cracking mainly near a surface layer of the negative electrode active material. In addition, an ionic substance is generated inside the active material, which causes the negative electrode active material to be a fragile substance. Cracking of the surface layer of the negative electrode active material consequently generates a new surface to increase a reaction area of the active material. In this time, a decomposition reaction of the electrolyte liquid occurs on the new surface, and a coating being a decomposed product of the electrolyte liquid is formed on the new surface to consume the electrolyte liquid. Therefore, cycle characteristics are likely to be deteriorated.

There have been various investigations so far on the negative electrode material for the lithium-ion secondary battery with the silicon-based material as a main material and electrode constitution in order to improve battery initial efficiency and the cycle characteristics.

Specifically, silicon and amorphous silicon dioxide are simultaneously deposited by using a gas phase method for a purpose of obtaining good cycle characteristics and high safety (see Patent Document 1, for example). To obtain a high battery capacity and safety, a carbon material (electron conductive material) is provided on surface layers of silicon oxide particles (see Patent Document 2, for example). To improve the cycle characteristics and to obtain high input-output characteristics, an active material containing silicon and oxygen is produced, and an active material layer having a higher oxygen proportion near a current collector is formed (see Patent Document 3, for example). To improve the cycle characteristics, a negative electrode is formed so that a silicon active material contains oxygen, an average oxygen content is 40 at% or less, and an oxygen content becomes large near a current collector (see Patent Document 4, for example).

To improve first charge-discharge efficiency, a nanocomposite containing a Si phase, $SiO_2$, and an $M_yO$ metal oxide is used (see Patent Document 5, for example). To improve the cycle characteristics, $SiO_x$ ($0.8 \leq x \leq 1.5$, particle size range = 1 um to 50 um) and a carbon material are mixed and calcined at high temperature (see Patent Document 6, for example). To improve the cycle characteristics, a mole ratio of oxygen to silicon in a negative electrode active material is set to 0.1 to 1.2 to control the active material within a range that a difference between a maximum value and a minimum value of the mole ratio near an interface between the active material and a current collector is 0.4 or less (see Patent Document 7, for example). To improve battery load characteristics, a metal oxide containing lithium is used (see Patent Document 8, for example). To improve the cycle characteristics, a hydrophobic layer such as a silane compound is formed on a surface layer of a silicon material (see Patent Document 9, for example). To improve the cycle characteristics, silicon oxide is used, and a graphite coating is formed on a surface layer of the silicon oxide to impart conductivity (see Patent Document 10, for example). In Patent Document 10, shift values obtained from a RAMAN spectrum on the graphite coating are as follows: broad peaks appear at 1330 $cm^{-1}$ and 1580 $cm^{-1}$ and an intensity ratio thereof $I_{1330}/I_{1580}$ satisfies $1.5<I_{1330}/I_{1580}<3$. To achieve a high battery capacity and to improve the cycle characteristics, particles having a silicon fine crystal phase dispersed in silicon dioxide is used (see Patent Document 11, for example). To improve overcharge and overdischarge characteristics, an oxide of silicon with regulated atom number ratio between silicon and oxygen of 1:y ($0<y<2$) is used (see Patent Document 12, for example).

As a lithium-ion secondary battery using an oxide of silicon, Hitachi Maxell, Ltd. started to ship rectangular secondary batteries adopting a nano-silicon composite for smartphones in June, 2010 (see Non Patent Document 1, for example). An oxide of silicon proposed by Hohl is a composite material of $Si^{0+}$ to $Si^{4+}$, which has various oxidation states (Non Patent Document 2). Kapaklis proposes a disproportionation structure in which a thermal load is applied to an oxide of silicon to cause separation into Si and $SiO_2$ (Non Patent Document 3).

Among oxides of silicon having the disproportionation structure, Miyachi, et al. focus on Si and $SiO_2$ that contribute to charge and discharge (Non Patent Document 4), and Yamada, et al. propose a reaction formula between the oxide of silicon and Li as follows (Non Patent Document 5).

$$2SiO(Si+SiO_2) + 6.85Li^+ + 6.85e^- \rightarrow 1.4Li_{3.75}Si + 0.4Li_4SiO_4 + 0.2SiO_2$$

In the reaction formula, Si and $SiO_2$ that constitute the oxide of silicon react with Li, and separated into Li silicide, Li silicate, and partially unreacted $SiO_2$.

The Li silicate generated here is irreversible, and is a stable substance that releases no Li after formed once. A capacity per mass calculated from this reaction formula is near an experimental value, and this reaction formula is recognized as a reaction mechanism of the oxide of silicon. Kim, et al. have identified the Li silicate, the irreversible component of the oxide of silicon with charge and discharge, as $Li_4SiO_4$ by using $^7$Li-MAS-NMR and $^{29}$Si-MAS-NMR (Non Patent Document 6). This irreversible capacity is most disadvantageous for the oxide of silicon, which is required to be improved. Accordingly, Kim, et al. use a Li pre-doping method in which the Li silicate is formed in advance to produce a negative electrode having remarkably improved first efficiency as a battery and being durable for practical use (Non Patent Document 7).

A method in which the electrode is not doped with Li but a powder is treated is also proposed. The method achieves improvement of the irreversible capacity (Patent Document 13).

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A

NON PATENT LITERATURE

Non Patent Document 1: Journal of BATTERY ASSOCIATION OF JAPAN "Denchi", May 1, 2010, p10.
Non Patent Document 2: A. Hohl, T. Wieder, P. A. van Aken, T. E. Weirich, G. Denninger, M. Vidal, S. Oswald, C. Deneke, J. Mayer, and H. Fuess, J. Non-Cryst. Solids, 320, (2003 ), 255.
Non Patent Document 3: V. Kapaklis, J. Non-Crystalline Solids, 354 (2008) 612.

Non Patent Document 4: Mariko Miyachi, Hironori Yamamoto, and Hidemasa Kawai, J. Electrochem. Soc. 2007, volume 154, issue 4, A376-A380.

Non Patent Document 5: M. Yamada, A. Inaba, A. Ueda, K. Matsumoto, T. Iwasaki, T. Ohzuku, J. Electrochem. Soc., 159, A1630 (2012).

Non Patent Document 6: Taeahn Kim, Sangjin Park, and Seung M. Oh, J. Electrochem. Soc. volume 154, (2007), A1112-A1117 .

Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.

## SUMMARY OF INVENTION

### TECHNICAL PROBLEM

As noted above, the small-sized electronic devices represented by mobile terminals have had higher performance and more functions in recent years, and the lithium-ion secondary battery, which is a main power source therefor, has required to increase the battery capacity. As one technique to solve this problem, there has been a demand for development of a lithium-ion secondary battery composed of a negative electrode using a silicon material as a main material. The lithium-ion secondary battery using the silicon material is desired to have initial charge-discharge characteristics and cycle characteristics comparable to those of a lithium-ion secondary battery using a carbon-based active material. Accordingly, the cycle characteristics and the initial charge-discharge characteristics have been improved by using an oxide of silicon modified by insertion and partial abstraction of Li as a negative electrode active material. However, only simple insertion of Li to form a composite has failed to yield sufficient battery characteristics. This is due to significant change in a state of the silicon compound constituting an inside of the bulk caused by various factors such as a raw material for inserting Li, conditions of a carbon coating, conditions for inserting Li, and thermal treatment conditions after the insertion.

The present invention been made in view of the above problems. An object of the present invention is to provide a negative electrode active material that can increase a battery capacity with improvement of first efficiency (also referred to as the initial efficiency) and that can achieve sufficient battery cycle characteristics, and a method for manufacturing the same.

### SOLUTION TO PROBLEM

To achieve the above object, the present invention provides a negative electrode active material comprising negative electrode active material particles, wherein the negative electrode active material particles contain silicon oxide particles coated with a carbon layer, and the silicon oxide particles contain $Li_2SiO_3$, and a Si2p spectrum obtained by XPS analysis has a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A.

The inventive negative electrode active material (hereinafter, also referred to as the silicon-based negative electrode active material) contains the negative electrode active material particles containing the silicon oxide particles (hereinafter, also referred to as the silicon-based negative electrode active material particles), and thereby the battery capacity can be improved. The silicon oxide particles containing $Li_2SiO_3$ improve the initial efficiency, and can stabilize a slurry before applying, which yields a good electrode and improves the battery characteristics. This $Li_2SiO_3$ has the peak near 102 eV in the Si2p spectrum obtained by XPS analysis. This peak being strongest contributes to stability in charge and discharge and in forming a slurry. In the inventive negative electrode active material, the Si2p spectrum obtained by XPS analysis necessarily has a peak of a low-valent Si compound state near 100 eV. This is because not only a reaction of Si-Li but also a composite compound of Si, Li, and O contribute to charge and discharge. Note that, if this peak becomes excessively strong, the peak of $Li_2SiO_3$ becomes small to deteriorate the structural stability, and thereby this peak is necessarily second strongest. In the Si2p spectrum, the intensity of the 0-valent Si peak near 99 eV is necessarily less than or equal to half of the intensity of the peak of $Li_2SiO_3$. This is because much 0-valent Si promotes deterioration.

The negative electrode active material preferably has three or more phase structures.

When the negative electrode active material has three or more phase structures as above, the contained Li silicate ($Li_2SiO_3$) hardly shifts the peak from near 102 eV to near 102.5 eV in the Si2p spectrum obtained by XPS analysis. This means that increase in crystallinity of the Li silicate ($Li_2SiO_3$) can be prevented, resulting in achievement of diffusibility of Li.

The negative electrode active material particles are preferably composed of three or more phase structures from a surface layer to an inside, the phase structures having, in an O1s spectrum obtained by XPS analysis, an outermost layer having a strongest peak near 531 eV, a lower portion having a peak near 528 eV, and a lower portion having a peak near 532.5 eV.

In the O1s spectrum obtained by XPS analysis of the negative electrode active material particles, the peak near 531 eV indicates a peak of a C,O compound present in the surface layer, and the peak near 528 eV indicates a peak of the low-valent Si. Thus, in XPS analysis of the negative electrode active material particles, the O1s spectrum obtained on the surface layer and having the C,O compound peak and the O1s spectrum obtained on the lower phase and having the low-valent Si peak as above facilitate to insertion of Li into the negative electrode active material particles. In addition, an O1s spectrum obtained inside the bulk of the negative electrode active material particles and having a peak on a higher energy side can stabilize the structure.

In the O1s spectrum obtained by the XPS analysis of the negative electrode active material particles, the peak obtained near 532.5 eV preferably splits into two peaks near 532 eV and near 533 eV.

The O1s peak generated on the highest energy side and inside the bulk of the negative electrode active material particles splitting into the peaks near 532 eV and near 533 eV as above can form constitution composed of: a silicate component having lower resistance and diffusing Li; and a silicate component to stabilize the structure.

Before the negative electrode active material particles are charged and discharged, the negative electrode active material particles preferably have a peak derived from a Si (111) crystal plane obtained by X-ray diffraction using Cu-K$\alpha$ ray, a crystallite size corresponding to the crystal plane is preferably 5.0 nm or less, and a ratio G/H of an intensity G of the peak derived from the Si (111) crystal plane relative to an intensity H of a peak derived from a $Li_2SiO_3$ (111) crystal plane preferably satisfies the following formula (1),

$$0.4 \leq G/H \leq 1.0 \quad ...(1).$$

As above, the negative electrode active material particles having the peak derived from the Si (111) crystal plane and the crystallite size corresponding to the crystal plane being 5.0 nm or less allow the silicon oxide particles to contain no crystalline Si utmost. This configuration can inhibit the reaction with the electrolyte liquid to prevent deterioration of the battery characteristics. As noted above, the crystallite size is desirably 5.0 nm or less, and the silicon oxide particles are desirably substantially amorphous. In this time, $Li_2SiO_3$ also exhibits crystallinity. $Li_2SiO_3$ with higher crystallinity more stabilizes the structure, but increases resistance. Meanwhile, $Li_2SiO_3$ with low crystallinity is easily eluted into a slurry. Thus, there is an optimal range. Therefore, the formula (1) is preferably satisfied.

A median size of the negative electrode active material particles is preferably 5.5 um or more and 15 um or less.

The median size of the negative electrode active material particles being 5.5 um or more can inhibit the reaction with the electrolyte liquid to inhibit deterioration of the battery characteristics. Meanwhile, the median size of the negative electrode active material particles being 15 um or less can inhibit expansion of the active material with charge and discharge to achieve electron contacting.

The carbon layer preferably has a portion in which the carbon layer is present as a compound state with oxygen on an outermost layer.

The carbon layer having the portion in which the carbon layer is present as a compound state with oxygen on an outermost layer as above can generate a substance like the coating structure generated with charge and discharge, and thereby the battery characteristics can be more improved.

In addition, the present also provides a method for manufacturing a negative electrode active material, the method comprising steps of: producing negative electrode active material particles by a method comprising steps of: producing silicon oxide particles; coating the silicon oxide particles with a carbon layer; inserting lithium into the silicon oxide particles coated with the carbon layer by an oxidation-reduction method; and subjecting the silicon oxide particles with inserted lithium to a thermal treatment to form silicon oxide particles containing $Li_2SiO_3$; and manufacturing a negative electrode active material by using the produced negative electrode active material particles, wherein, by regulating a temperature in inserting the lithium and a temperature of the thermal treatment, the silicon oxide particles are set to have, in a Si2p spectrum obtained by XPS analysis, a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A.

According to such a method for manufacturing a negative electrode active material, the above negative electrode active material having each peak in the Si2p spectrum obtained by XPS analysis can be manufactured.

ADVANTAGEOUS EFFECTS OF INVENTION

The inventive negative electrode active material can yield high initial efficiency, high capacity, and high cycle characteristics when used as the negative electrode active material of a secondary battery. In addition, according to the inventive method for manufacturing a negative electrode active material, the negative electrode active material having high capacity and good initial charge-discharge characteristics while obtaining the good cycle characteristics when used as the negative electrode active material of a secondary battery can be manufactured.

BRIEF DESCRIPTION OF DRAWINGS

FIG. 1 is a Si2p spectrum obtained by XPS analysis in Example 1.
FIG. 2 is a Si2p spectrum obtained by XPS analysis in Example 2.
FIG. 3 is a Si2p spectrum obtained by XPS analysis in Example 3.
FIG. 4 is a Si2p spectrum obtained by XPS analysis in Comparative Example 1.
FIG. 5 is a Si2p spectrum obtained by XPS analysis in Comparative Example 2.
FIG. 6 is a Si2p spectrum obtained by XPS analysis in Comparative Example 3.
FIG. 7 is a Si2p spectrum obtained by XPS analysis in Comparative Example 4.
FIG. 8 is a Si2p spectrum obtained by XPS analysis in Comparative Example 5.
FIG. 9 is an O1s spectrum obtained by XPS analysis in Example 1.
FIG. 10 is an O1s spectrum obtained by XPS analysis in Comparative Example 1.
FIG. 11 is an O1s spectrum obtained by XPS analysis in Comparative Example 2.
FIG. 12 is a cross-sectional view illustrating an example of constitution of a negative electrode for a lithium-ion secondary battery containing the inventive negative electrode active material.

DESCRIPTION OF EMBODIMENTS

Hereinafter, embodiments of the present invention will be described, but the present invention is not limited thereto.

As one technique to increase a battery capacity of a lithium-ion secondary battery, it has been investigated to use a negative electrode using an oxide of silicon as a main material as a negative electrode of the lithium-ion secondary battery, as noted above. This lithium-ion secondary battery using the oxide of silicon is desired to have initial charge-discharge characteristics comparable to those of a lithium-ion secondary battery using a carbon-based active material. In addition, a Li-doped SiO that can improve the initial charge-discharge characteristics is desired to have cycle characteristics comparable to those of the carbon-based active material. However, the silicon-based negative electrode active material exhibiting battery characteristics equivalent to those of the carbon-based active material when used as a negative electrode active material of the lithium-ion secondary battery has not been proposed.

The present inventors have made earnest study to obtain a negative electrode active material that can improve the initial charge-discharge characteristics and consequently increase the battery capacity while obtaining the high cycle characteristics when used as the negative electrode active material of the secondary battery. This study has led to the present invention.

Inventive Negative Electrode Active Material

The inventive negative electrode active material is a negative electrode active material comprising negative electrode active material particles, wherein the negative electrode active material particles contain silicon oxide particles coated with a carbon layer, and the silicon oxide particles contain $Li_2SiO_3$, and a Si2p spectrum obtained by XPS analysis has a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A.

The XPS analysis can be performed by using, for example, a scanning X-ray photoelectron spectrometer PHI Quantera II, manufactured by ULVAC-PHI, INCORPORATED. In this time, a beam diameter of X-ray may be 100 um in diameter, and a neutralization gun may be used.

Since the inventive negative electrode active material contains the negative electrode active material particles containing the silicon oxide particles, the battery capacity can be improved. In addition, forming $Li_2SiO_3$ in the silicon oxide particles can stabilize a slurry before applying, which yields a good electrode and improves the battery characteristics. This $Li_2SiO_3$ has the peak near 102 eV in the Si2p spectrum obtained by XPS analysis. This peak being strongest contributes to stability in charge and discharge and in forming a slurry. In the inventive negative electrode active material, the Si2p spectrum obtained by XPS analysis necessarily has a low-valent Si compound state near 100 eV. This is because not only a reaction of Si-Li but also a composite compound of Si, Li, and O contribute to charge and discharge. Note that, if this peak becomes excessively strong, the peak of $Li_2SiO_3$ near 102 eV becomes small to deteriorate the structural stability. In the Si2p spectrum, the intensity of the 0-valent Si peak near 99 eV is necessarily less than or equal to half of the intensity of the peak of $Li_2SiO_3$ near 102 eV. This is because much 0-valent Si promotes deterioration. The carbon coating imparts conductivity, and yields an effect of water resistance at a certain degree.

The inventive negative electrode active material preferably has three or more phase structures. When the negative electrode active material has three or more phase structures, the contained Li silicate ($Li_2SiO_3$) hardly shifts the peak from near 102 eV to near 102.5 eV in the Si2p spectrum obtained by XPS analysis. This means that increase in crystallinity of the Li silicate ($Li_2SiO_3$) can be prevented, resulting in achievement of diffusibility of Li.

In the inventive negative electrode active material, the negative electrode active material particles are preferably composed of three or more phase structures from a surface layer to an inside, the phase structures having, in an O1s spectrum obtained by XPS analysis, an outermost layer having a strongest peak near 531 eV, a lower portion having a peak near 528 eV, and a lower portion having a peak near 532.5 eV.

In the O1s spectrum obtained by XPS analysis, the peak near 531 eV indicates a peak of a C,O compound present in the surface layer, and the peak near 528 eV indicates a peak of the low-valent Si. Thus, the negative electrode active material particles having the peak of the C,O compound in the surface layer and having the lower phase having the low-valent Si peak as above facilitate to insertion of Li into the negative electrode active material particles. In addition, an O1s spectrum obtained inside the bulk of the negative electrode active material particles and having a peak on a higher energy side can stabilize the structure.

In the O1s spectrum obtained by the XPS analysis of the negative electrode active material particles in the inventive negative electrode active material particles, the peak obtained near 532.5 eV preferably splits into two peaks near 532 eV and near 533 eV. The O1s peak generated on the highest energy side and inside the bulk of the negative electrode active material particles desirably splits into the two peaks near 532 eV and near 533 eV as above. This peak can form constitution composed of: a silicate component having lower resistance and diffusing Li; and a silicate component to stabilize the structure.

Before the inventive negative electrode active material particles are charged and discharged, the negative electrode active material particles preferably have the following configuration. Specifically, the negative electrode active material particles preferably have a peak derived from a Si (111) crystal plane obtained by X-ray diffraction using Cu-Kα ray, and a crystallite size corresponding to the crystal plane is preferably 5.0 nm or less. In addition, a ratio G/H of an intensity G of the peak derived from the Si (111) crystal plane relative to an intensity H of a peak derived from a $Li_2SiO_3$ (111) crystal plane preferably satisfies the following formula (1),

$$0.4 \leq G/H \leq 1.0 \quad ...(1).$$

As above, the negative electrode active material particles having the peak derived from the Si (111) crystal plane and the crystallite size corresponding to the crystal plane being 5.0 nm or less allow the silicon oxide particles to contain no crystalline Si utmost. This configuration can inhibit the reaction with the electrolyte liquid to prevent deterioration of the battery characteristics. As noted above, the crystallite size is desirably 5.0 nm or less, and the silicon oxide particles are desirably substantially amorphous. In this time, $Li_2SiO_3$ also exhibits crystallinity. $Li_2SiO_3$ with higher crystallinity more stabilizes the structure, but increases resistance. Meanwhile, $Li_2SiO_3$ with low crystallinity is easily eluted into a slurry. Thus, there is an optimal range. Therefore, the formula (1) is preferably satisfied.

In the inventive negative electrode active material, a median size of the negative electrode active material particles is preferably 5.5 um or more and 15 um or less. The median size of the negative electrode active material particles of 5.5 um or more can inhibit the reaction with the electrolyte liquid to inhibit deterioration of the battery characteristics. Meanwhile, the median size of the negative electrode active material particles of 15 um or less can inhibit expansion of the active material with charge and discharge to achieve electron contacting.

The carbon layer preferably has a portion in which the carbon layer is present as a compound state with oxygen on an outermost layer. Such a carbon layer having the portion in which the carbon layer is present as a compound state with oxygen on an outermost layer can generate a substance like the coating structure generated in charge and discharge, and thereby the battery characteristics can be more improved.

<Negative Electrode for Non-Aqueous Electrolyte Secondary Battery>

Constitution of Negative Electrode

Subsequently, constitution of a negative electrode for a secondary battery containing the inventive negative electrode active material as above will be described.

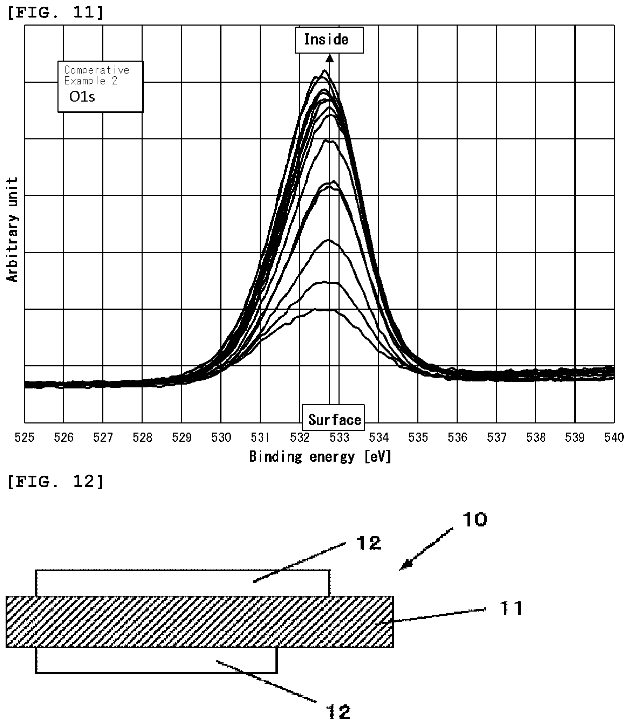

FIG. 12 illustrates a cross-sectional view of the negative electrode containing the inventive negative electrode active material. As illustrated in FIG. 12, a negative electrode 10 has constitution having a negative electrode active material layer 12 on a negative electrode current collector 11. This negative electrode active material layer 12 may be provided on both surfaces or only one surface of the negative electrode current collector 11. As long as the inventive negative electrode active material is used, the negative electrode current collector 11 may be absent.

Negative Electrode Current Collector

The negative electrode current collector 11 is composed of a material having excellent conductivity and being superior in mechanical strength. Examples of the conductive material usable for the negative electrode current collector 11 include copper (Cu) and nickel (Ni). This conductive material is preferably a material that does not form an intermetallic compound with lithium (Li).

The negative electrode current collector 11 preferably contains carbon (C) and sulfur (S) in addition to the main element. This is because physical strength of the negative electrode current collector is improved. Particularly, when an active material layer expanding during charge is contained, the current collector containing the above elements yields an effect of inhibiting deformation of the electrode having the current collector. A content of the above contained elements is not particularly limited, but preferably each 100 mass-ppm or less. This is because a higher effect of inhibiting the deformation can be obtained. Such an effect of inhibiting deformation can further improve the cycle characteristics.

A surface of the negative electrode current collector 11 may be roughened, or may not be roughened. Examples of the roughened negative electrode current collector include a metal foil subjected to an electrolytic treatment, an emboss treatment, or a chemical etching treatment. Examples of the unroughened negative electrode current collector include a rolled metal foil.

Negative Electrode Active Material Layer

The negative electrode active material layer 12 contains the inventive negative electrode active material, which can occlude and release lithium ions. The negative electrode active material layer 12 may further contain other materials such as a negative electrode binding agent (binder) and a conductive auxiliary from the viewpoint of battery design. The negative electrode active material contains negative electrode active material particles, and the negative electrode active material particles contain silicon oxide particles.

The negative electrode active material layer 12 may also contain a mixed material of the negative electrode active material containing the inventive negative electrode active material (the silicon-based negative electrode active material) and a carbon-based active material. This mixed material reduces electric resistance of the negative electrode active material layer, and can relax expansion stress with charge. Examples of the usable carbon-based active material include pyrolytic carbons, cokes, glass-like carbon fibers, organic polymer compound calcined products, and carbon blacks.

The inventive negative electrode active material contains the silicon oxide particles, as noted above. A ratio between silicon and oxygen in silicon oxide to constitute these silicon oxide particles is preferably a ratio within a range of $SiO_x$: $0.8 \leq x \leq 1.2$. "x" of 0.8 or more, which indicates an increased oxygen ratio compared with a silicon single substance, yields good cycle characteristics. "x" of 1.2 or less is preferable because resistance of the silicon oxide particles becomes not excessively high. Among these, the composition of $SiO_x$ having "x" of closer to 1 is more preferable. This is because high cycle characteristics are obtained. The composition of the silicon oxide particles in the present invention does not necessarily means a purity of 100%, and the silicon oxide particles may contain a trace amount of impurity elements.

In the inventive negative electrode active material, the negative electrode active material particles contain the silicon oxide particles coated with a carbon layer, and the silicon oxide particles contain $Li_2SiO_3$ as a Li compound, as noted above. In addition, a Si2p spectrum of these silicon oxide particles obtained by XPS analysis has a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A.

An enlargement degree of the Li silicate and a crystalline degree of Si (for example, a crystallite size corresponding to a Si (111) crystal plane) can be determined by X-ray diffraction (XRD). The XRD measurement may be performed under the following conditions, for example.

As the X-ray diffraction apparatus, D8 ADVANCE, manufactured by Bruker AXS GmbH., may be used, for example. The X-ray source is Cu Kα ray, a Ni filter is used, and the measurement is performed at an output of 40 kV / 40 mA, a slit width of 0.3°, a step width of 0.008°, and a range of 10 to 40° with a counting time per step of 0.15 seconds.

As the negative electrode binding agent contained in the negative electrode active material layer, any one or more of polymer materials, synthetic rubbers, etc. may be used, for example. Examples of the polymer material include polyvinylidene fluoride, a polyimide, a polyamideimide, an aramid, polyacrylic acid, lithium polyacrylate sodium polyacrylate, and carboxymethylcellulose. Examples of the synthetic rubber include a styrene-butadiene-based rubber, a fluorine-based rubber, and ethylene-propylene-diene.

Examples of the negative electrode conductive auxiliary include carbon fine particles, carbon black, acetylene black, graphite, Ketjenblack, carbon nanotube, and carbon nanofiber, and any one or more of these may be used.

The negative electrode active material layer is formed with an application method, for example. The application method is a method in which the silicon-based negative electrode active material particles, the above binding agent, etc., and as necessary, the conductive auxiliary and the carbon-based active material are mixed, and then the mixture is dispersed in an organic solvent, water, etc. and applied.

Method for Manufacturing Negative Electrode

Subsequently, an example of a method for manufacturing the inventive negative electrode active material will be described.

The inventive method for manufacturing a negative electrode active material comprises steps of: producing negative electrode active material particles by a method comprising steps of: producing silicon oxide particles; coating the silicon oxide particles with a carbon layer; inserting lithium into the silicon oxide particles coated with the carbon layer by an oxidation-reduction method; and subjecting the silicon oxide particles with inserted lithium to a thermal treatment to form silicon oxide particles containing $Li_2SiO_3$; and manufacturing a negative electrode active material by using the produced negative electrode active material particles. In this time, by regulating a temperature in inserting the lithium and a temperature of the thermal treatment, the silicon oxide particles to be manufactured are regulated to have, in a Si2p spectrum obtained by XPS analysis, a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A.

More specifically, the negative electrode active material is manufactured in the following procedure, for example.

First, silicon oxide particles are produced. Hereinafter, a case where silicon oxide represented by $SiO_x$ ($0.5 \leq x \leq 1.6$) is used as the silicon oxide particles will be described. First, a raw material to generate silicon oxide gas is heated in the presence of an inert gas and under a reduced pressure within a temperature range of 900°C to 1600°C to generate silicon oxide gas. In this time, the used raw material may be a mixture of a metal silicon powder and a silicon dioxide powder. With considering presence of oxygen on a surface of the metal silicon powder and trace oxygen in the reaction furnace, it is desirable that the mixing mole ratio is within a range of 0.9 < the metal silicon powder / the silicon dioxide powder < 1.2.

The generated silicon oxide gas is solidified and deposited on an absorbent plate. Then, the deposited product of the silicon oxide is taken out in a state where a temperature in the reaction furnace is lowered to 100°C or lower, and crushed and powdered by using a ball mill, a jet mill, etc. The silicon oxide particles can be produced as above. Si crystallites in the silicon oxide particles can be regulated by changing the gasifying temperature of the raw material to generate the silicon oxide gas, or performing a thermal treatment after generation of the silicon oxide particles.

Here, a layer of a carbon material is generated on surface layers of the silicon oxide particles. A method for generating the carbon coating layer is desirably a pyrolytic CVD method. Hereinafter, an example of the method for generating the carbon material layer by the pyrolytic CVD method will be described below.

The silicon oxide particles are set in a furnace. Then, a hydrocarbon gas is introduced into the furnace, and a temperature in the furnace is raised. The decomposition temperature is desirably 900°C or lower, and more desirably 850°C or lower. Setting the decomposition temperature to 900°C or lower enables to inhibit unintended disproportionation of the active material particles. The temperature in the furnace is raised to the predetermined temperature, and then the carbon layer is generated on the surfaces of the silicon oxide particles. The hydrocarbon gas to be the raw material of the carbon layer is not particularly limited, but desirably has $C_nH_m$ composition wherein $n \leq 2$. The composition of $n \leq 2$ can reduce a manufacturing cost, and can yield good physical properties of the decomposed product.

Then, Li is inserted into the silicon oxide particles produced as above. This Li insertion produces negative electrode active material particles containing silicon oxide particles with inserted Li. That is, this Li insertion modifies the silicon oxide particles to generate a Li compound (Li silicate) inside the silicon oxide particles. In the inventive method for manufacturing a negative electrode active material, Li is inserted by an oxidation-reduction method as noted above.

As the modification by the oxidation-reduction method, for example, the silicon-based active material particles can be firstly immersed in a solution A in which lithium is dissolved in an ether solvent to insert lithium. This solution A may further contain a polycyclic aromatic compound or a linear polyphenylene compound. After the insertion of lithium, the silicon-based active material particles are immersed in a solution B containing a polycyclic aromatic compound or a derivative thereof to abstract active lithium from the silicon-based active material particles. As the solvent of this solution B, an ether solvent, a ketone solvent, an ester solvent, an alcohol solvent, an amine solvent, or a mixed solvent thereof may be used, for example. After the immersion in the solution A, the obtained silicon-based active material particles may be subjected to a thermal treatment under an inert gas. The thermal treatment can stabilize the Li compound. Thereafter, the silicon-based active material particles may be washed by a washing method with an alcohol, alkaline water dissolving lithium carbonate, a weak acid, pure water, etc.

As the ether solvent used for the solution A, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, a mixed solvent thereof, etc. may be used. Among these, tetrahydrofuran, dioxane, or 1,2-dimethoxyethane is particularly preferably used. These solvents are preferably dehydrated, and preferably deoxygenated.

As the polycyclic aromatic compound contained in the solution A, one or more of naphthalene, anthracene, phenanthrene, naphthacene, pentacene, pyrene, picene, triphenylene, coronene, chrysene, and a derivative thereof may be used. As the liner polyphenylene compound, one or more of biphenyl, terphenyl, and a derivative thereof may be used.

As the polycyclic aromatic compound contained in the solution B, one or more of naphthalene, anthracene, phenanthrene, naphthacene, pentacene, pyrene, picene, triphenylene, coronene, chrysene, and a derivative thereof may be used.

As the ether solvent for the solution B, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, etc. may be used.

As the ketone solvent, acetone, acetophenone, etc. may be used.

As the ester solvent, methyl formate, methyl acetate, ethyl acetate, propyl acetate, isopropyl acetate, etc. may be used.

As the alcohol solvent, methanol, ethanol, propanol, isopropyl alcohol, etc. may be used.

As the amine solvent, methylamine, ethylamine, ethylenediamine, etc. may be used.

The Li silicate generated as above is mainly $Li_4SiO_4$, and it is difficult to form a battery as it is. Thus, a thermal treatment is performed to convert $Li_4SiO_4$ into $Li_2SiO_3$, and a crystallization degree of the Li silicate and Si changes depending on the temperature in this time. In addition, the reaction temperature in the Li insertion also relates to the crystallization degree. Specifically, when Li is inserted at a temperature near a boiling point of the used solvent, crystallinity of Si is exhibited during the subsequent thermal treatment step in spite of not so large crystallinity of the Li silicate. Thus, a balance between the thermal treatment and the Li insertion step is important.

An excessively low temperature in the Li insertion yields low reactivity. The temperature is preferably at least 50°C or higher, Such a temperature can provide reactivity in the Li insertion. Setting the reactivity in the Li insertion to be equal to or higher than a predetermined level can prevent an excessively high concentration of Li in surface layer portions of the particles, and consequently can inhibit proceeding of disproportionation of the surface layer portions during the subsequent thermal treatment step.

As for the C,O compound in the outermost layer, O cannot be introduced from a substance that contains no oxygen and that forms a complex with Li, such as, for example, biphenyl being a polycyclic aromatic compound. Thus, O contained in the solvent A is necessarily used. When Li is released from the complex, the solvent is desirably involved and decomposed to generate the C,O compound. The compound is unstable as it is, and thereby the additional thermal treatment is preferably performed to form a stabilized layer with partial decomposition. This layer is called as a pseudo-SEI coating, which enables smooth transfer of Li when used as a battery.

The material subjected to the Li-doping treatment by the oxidation-reduction method can be subjected to a thermal treatment at 500°C or higher and 650°C or lower after filtering to control a type, amount (existence proportion), etc. of the Li silicate. For such controlling, it is important to perform the thermal treatment in a vacuum state or under an inert gas. As for a thermal treatment apparatus, although the apparatus is not limited, a uniform thermal treatment, such as a rotary kiln, is desirably used. In this time, various state of the Li silicate can be created with factors of the vacuum state, a flow rate (internal pressure) of the inert gas, a retort thickness, and a number of rotation. What kind of the Li silicate state is created under what kind of conditions can be easily determined experimentally by a person skilled in the art. Enlargement of silicon and an amorphous property of silicon can also be similarly controlled. These controls under what kind of conditions can also be easily determined experimentally by a person skilled in the art.

In the inventive method for manufacturing a negative electrode active material, the temperature in the lithium insertion and the temperature in the thermal treatment are regulated to manufacture the silicon oxide particles so that a Si2p spectrum obtained by XPS analysis has a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A. Such conditions can be easily determined experimentally by a person skilled in the art. Specifically, the temperature in the lithium insertion and the temperature in the thermal treatment are regulated, but in addition, a temperature in the SiO deposition and the CVD temperature are also preferably regulated.

The negative electrode active material produced as above is mixed with other materials such as a negative electrode binding agent and a conductive auxiliary to form a negative electrode mixture, and then an organic solvent, water, etc. is added to prepare a slurry. Thereafter, the slurry is applied on a surface of a negative electrode current collector, and dried to form a negative electrode active material layer. In this time, heating pressing may be performed as necessary. The negative electrode can be produced as above.

Separator

The separator separates the positive electrode and the negative electrode, prevents current short circuit due to contacting of both the electrodes, and enables lithium ions to permeate. This separator is formed with a porous film composed of, for example, a synthetic resin or ceramic, and may have a laminated structure in which two or more types of the porous films are laminated. Examples of the synthetic resin include polytetrafluoroethylene, polypropylene, and polyethylene.

Electrolyte Liquid

At least a part of the active material layer or the separator is impregnated with a liquid electrolyte (electrolyte liquid). This electrolyte liquid dissolves an electrolyte salt in a solvent, and may contain other materials such as additives.

As the solvent, a non-aqueous solvent may be used, for example. Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, at least one or more of ethylene carbonate, propylene carbonate, dimethyl carbonate, diethyl carbonate, and ethyl methyl carbonate are desirably used. This is because better characteristics can be obtained. In this case, a combination of: a solvent with high viscosity, such as ethylene carbonate and propylene carbonate; and a solvent with low viscosity, such as dimethyl carbonate, ethyl methyl carbonate, and diethyl carbonate can yield more advantageous characteristics. This is because dissociation ability and ion mobility of the electrolyte salt are improved.

When an alloy-type negative electrode is used, the solvent desirably contains at least one of a halogenated chain carbonate ester or a halogenated cyclic carbonate ester. This forms a stable coating on the surface of the negative electrode active material during charge and discharge, particularly during charge. Here, the halogenated chain carbonate ester refers to a chain carbonate ester having a halogen as a constituent element (at least one hydrogen is substituted with a halogen atom). The halogenated cyclic carbonate ester refers to a cyclic carbonate ester having a halogen as a constituent element (that is, at least one hydrogen is substituted with a halogen atom).

A type of the halogen atom is not particularly limited, but preferably fluorine. This is because a better coating is formed compared with other halogen atoms. A larger number of the halogen atoms is more desirable. This is because a more stable coating is obtained and a decomposition reaction of the electrolyte liquid is inhibited.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-one and 4,5-difluoro-1,3-dioxolan-2-one.

As the solvent additive, an unsaturated carbon bond cyclic carbonate ester is preferably contained. This is because a stable coating is formed on the negative electrode surface during charge and discharge to inhibit the decomposition reaction of the electrolyte liquid. Examples of the unsaturated carbon bond cyclic carbonate ester include vinylene carbonate or vinylethylene carbonate.

As the solvent additive, sultone (cyclic sulfonate ester) is preferably contained. This is because chemical stability of the battery is improved. Examples of the sultone include propane sultone and propene sultone.

Furthermore, the solvent preferably contains an acid anhydride. This is because chemical stability of the electrolyte liquid is improved. Examples of the acid anhydride include propanedisulfonic anhydride.

The electrolyte salt may contain any one or more of a light metal salt such as a lithium salt, for example. Examples of the lithium salt include lithium hexafluorophosphate ($LiPF_6$) and lithium tetrafluoroborate ($LiBF_4$).

A content of the electrolyte salt is preferably 0.5 mol/kg or more and 2.5 mol/kg or less relative to the solvent. This is because high ion conductivity is obtained.

EXAMPLE

Hereinafter, the present invention will be more specifically described with showing Examples and Comparative Examples of the present invention, but the present invention is not limited to these Examples.

Common Conditions in Examples

First, a negative electrode active material was produced as follows. A raw material in which metal silicon and silicon dioxide were mixed was introduced into a reaction furnace, gasified in an atmosphere at a vacuum degree of 10 Pa, and deposited on an absorbent plate. After sufficient cooling, the deposited product was taken out and crushed with a ball mill. As for the silicon oxide particles obtained as above, a value of "x" of $SiO_x$ was 1.0. Subsequently, the particle size of the silicon oxide particles was regulated by classification. Thereafter, thermal CVD was performed within a range from 700°C to 900°C to coat surfaces of the silicon oxide particles with a carbon material.

Subsequently, by using a solvent in which water was reduced to 50 ppm, lithium was inserted into the silicon oxide particles by an oxidation-reduction method to perform modification. Thereafter, the silicon oxide particles were heated within a range of 450°C to 650°C to perform modification.

Then, the produced negative electrode active material (silicon oxide particles), graphite, a conductive auxiliary 1 (carbon nanotube, CNT), a conductive auxiliary 2 (carbon fine particles having a median size of approximately 50 nm), sodium polyacrylate, and carboxymethylcellulose (hereinafter, referred to as CMC) were mixed at a dry mass ratio of 9.3:83.7:1:1:4:1, and then the mixture was diluted with pure water to prepare a negative electrode mixture slurry.

As a negative electrode current collector, an electrolytic copper foil with 15 um in thickness was used. This electrolytic copper foil contained carbon and sulfur at a concentration of each 70 mass-ppm. Finally, the negative electrode mixture slurry was applied on the negative electrode current collector, and dried in a vacuum atmosphere at 100°C for 1 hour. A deposition amount of a negative electrode active material layer per unit area (also referred to as "area density") on one surface of the negative electrode after the drying was 7.0 mg/cm$^2$.

Next, solvents (ethylene carbonate (EC) and dimethyl carbonate (DMC)) were mixed, and then an electrolyte salt (lithium hexafluorophosphate: LiPF$_6$) was dissolved to prepare an electrolyte liquid. In this case, a composition of the solvent was EC:DMC = 30:70 at a volume ratio, and a content of the electrolyte salt was 1 mol/kg relative to the solvent. As additives, vinylene carbonate (VC) and fluoroethylene carbonate (FEC) were added at respectively 1.0 wt% and 2.0 wt%.

Then, a coin battery was assembled as follows. First, Li foil with 1 mm in thickness was punched to 16 mm in diameter, and adhered to an aluminum clad. The obtained negative electrode was punched to 15 mm in diameter, disposed opposite to the Li foil via a separator, the electrolyte liquid was injected, and then a 2032 coin battery was produced.

First efficiency was measured under the following conditions.

·First, the produced coin battery was charged at a charge rate of equivalently 0.03 C. In this time, the charge was performed with a CCCV mode. The CV was 0 V, and the termination current was 0.04 mA.

·The coin battery was CC-discharged at a discharge rate of similarly 0.03 C and a discharge termination voltage of 1.2 V.

Thereafter, the first efficiency (which may be referred to as "initial efficiency") was calculated. The first efficiency was calculated with the formula represented by First efficiency (%) = (First discharge capacity / First charge capacity) × 100.

From the obtained initial data, a counter positive electrode was designed to evaluate the battery.

The cycle characteristics were determined as below. To stabilize the battery, under an atmosphere at 25°C, the battery was firstly charged and discharged at 0.2 C with two cycles to measure a discharge capacity at the 2nd cycle. The battery cycle characteristics were calculated from a discharge capacity at the 3rd cycle, and the battery test was stopped at the 100th cycle. The charge was performed at 0.7 C, and the discharge was performed at 0.5 C. The charge voltage was 4.3 V, the discharge termination voltage was 2.5 V, and the charge termination rate was 0.07 C.

For XPS analysis of the negative electrode active material, a scanning X-ray photoelectron spectrometer PHI Quantera II, manufactured by ULVAC-PHI, INCORPORATED, was used. A beam diameter of the X-ray was 100 um, and a neutralization gun was used.

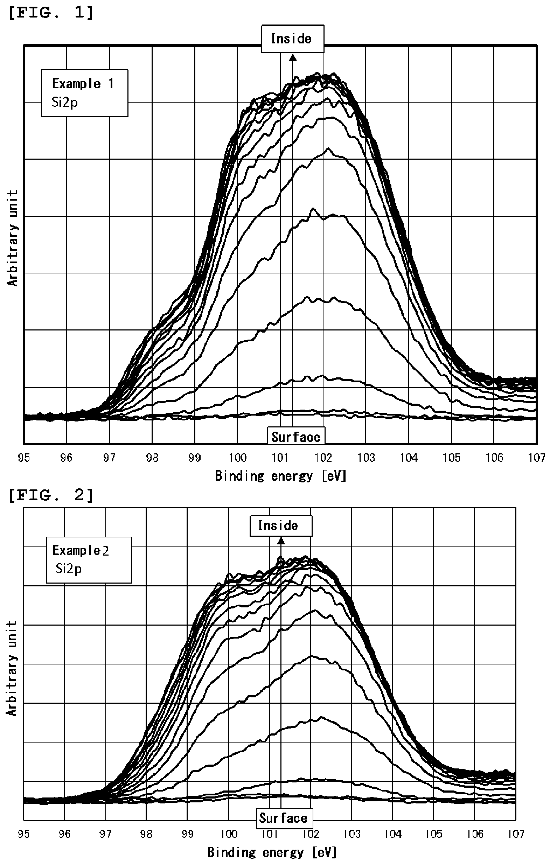

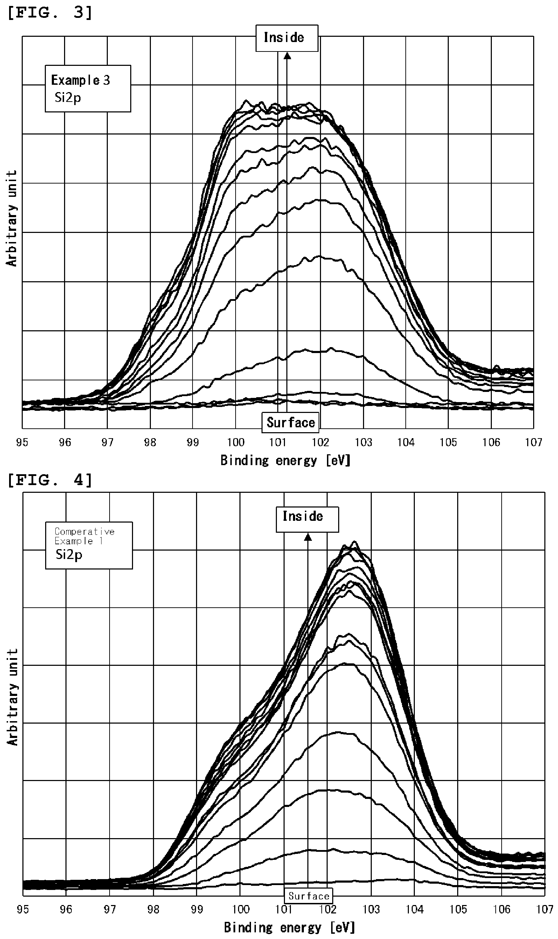

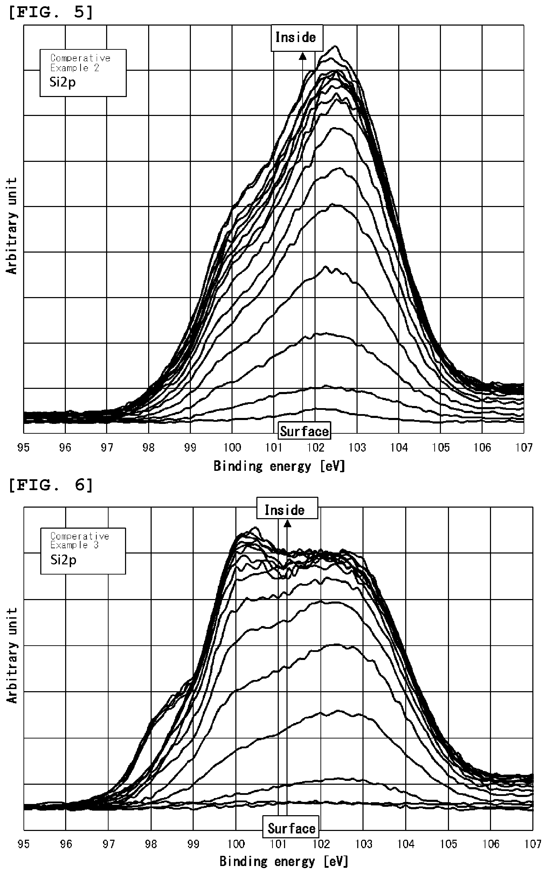

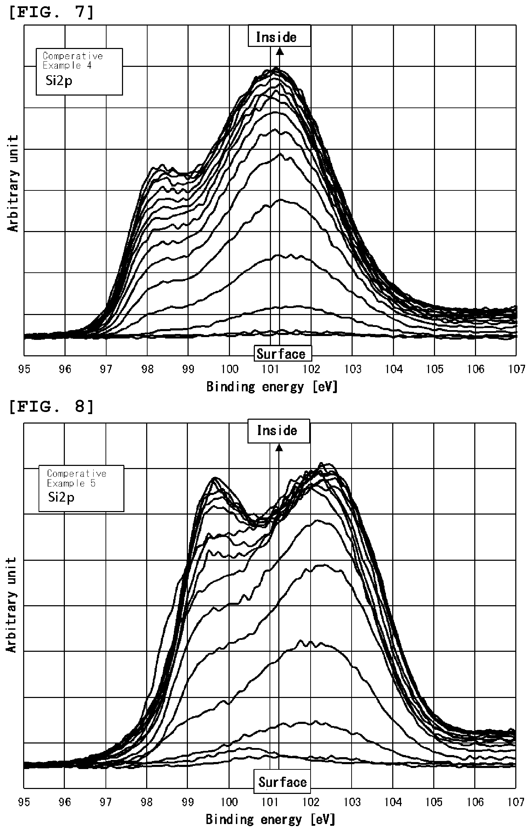

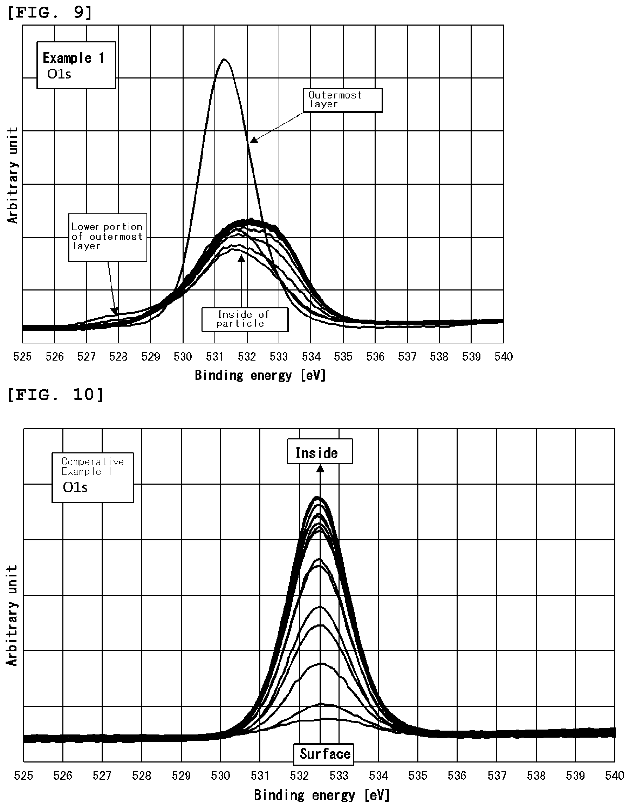

Table 1 summarizes the results of Examples and Comparative Examples. FIGS. 1 to 3 show Si2p spectra obtained by XPS analysis in Examples 1 to 3, respectively. FIGS. 4 to 8 show Si2p spectra obtained by XPS analysis in Comparative Examples 1 to 5, respectively. FIG. 9 shows an O1s spectrum obtained by XPS analysis in Example 1. FIGS. 10 and 11 each show an O1s spectrum obtained by XPS analysis in Comparative Example 1. In the graphs of the XPS spectra, a curve in an upper side indicates the measurement result in the particle surface layer portion, and a curve on a lower side in the graph indicates the measurement result of the bulk.

Example 1

The Li-doping treatment was performed at a temperature lower than a boiling point of a solvent (diglyme) by 15°C, and the stabilization treatment after the doping was performed at a temperature of 580°C.

As a result, formed were: stable high-valent silicon oxide particles; a peak of B, which mainly occluded and released Li in charge and discharge; and little 0-valent silicon, which adversely affected the battery characteristics. Thus, the cycle characteristics and the first efficiency were good.

Example 2

The Li-doping was performed in the same manner as in Example 1 except that the temperature in the Li-doping was set to be lower than the boiling point by 60°C, which performed gentle doping treatment. The temperature of the subsequent stabilization treatment was also set to as low as 570°C.

As a result, the 0-valent silicon was able to be further reduced compared with Example 1. Thus, the cycle characteristics and the first efficiency were improved compared with Example 1.

Example 3

The Li-doping was performed in the same manner as in Example 1 except that the conditions were set so that the reaction temperature in the Li-doping was lower than the boiling point by 10°C, and the temperature of the stabilization treatment was set to 600°C.

In Example 3, the regulation of the Si2p spectrum obtained by the XPS analysis of the inventive negative electrode active material was also satisfied, and the cycle characteristics and the first efficiency were good.

Example 4

The Li-doping was performed in the same manner as in Example 1 except that the reaction temperature in the Li-doping was set to be higher than that in Example 1 by 10°C. The temperature of the stabilization treatment was set to be same as that in Example 1.

In Example 4, the regulation of the Si2p spectrum obtained by the XPS analysis of the inventive negative electrode active material was also satisfied, and the cycle characteristics and the first efficiency were good. Note that the Si crystallite size became large, and crystallization proceeded. The cycle characteristics was consequently deteriorated compared with Examples 1 to 3, but was better results compared with Comparative Examples described later.

Examples 5 to 8

The reaction temperature was set to be same as in Example 1, but the temperature in the thermal treatment was changed to change the crystallinity.

As a result, the crystallite size corresponding to the Si (111) crystal plane was 5 nm or less, and observed was a tendency that lower crystallinity more improved the cycle characteristics.

Examples 9 to 14

To find an optimal particle size of the negative electrode active material particles, the particle size of the raw material was changed.

As a result, a median size within a range of 5.5 um or more and 15 um or less yielded particularly good results.

Comparative Example 1

Compared with Example 1, a SiO/C material without the Li-doping treatment was manufactured.

Since the Li-doping treatment was not performed, the initial efficiency was low, and the battery characteristics were deteriorated. In addition, the maximum value of Si2p shifted onto the high-energy side, which has a different shape from Example 1. The O1s also found to be a uniform state.

Comparative Example 2

The Li-doping was formed by mixing the material in Comparative Example 1 with LiH, and performing the thermal treatment at 620°C.

It was found that the maximum value of Si2p was close to the value in Comparative Example 1, and the waveform of O1s was similar. It was also found that the thermal doping proceeded disproportionation and crystallization to allow Si (111) to be crystalline.

Comparative Example 3

The Li-doping was performed on the raw material of the Comparative Example 1 in the same manner as in Example 1. Thereafter, the thermal treatment was performed at a temperature of 620°C to fix the Li silicate structure in the bulk.

The low-valent silicon compound was formed, and repeated charge and discharge formed an electrochemically unstable structure, which easily proceeded disproportionation.

Comparative Example 4

The Li-doping was performed on the raw material of the Comparative Example 1 in the same manner as in Example 1. The temperature in the Li-doping was set to be higher than the temperature in Example 1 by 10°C. The reaction rate with Li was increased.

The high-valent state having the stable structure was transferred to the unstable low-valent state. Repeated charge and discharge proceeded disproportionation.

Comparative Example 5

The material same as in Comparative Example 4 was subjected to the stabilization treatment at the same temperature as in Comparative Example 3.

As a result, proceeded was disproportionation in which a peak of the high-valent compound shifted onto a high-energy side and the low-valent side shifted onto a low-energy side, and the battery characteristics were deteriorated.

[Table 1]

| | Retention until 100th cycle (%) | First efficiency (%) | Particle size [$\mu$m] | Comparison with peak A and peak B, and comparison with peak A and peak C | O1s, largest peak at 531 eV, peak at 528 eV, near 532.5 eV | Ratio G/H between Si(111) and Li$_2$SiO$_3$ (111) | Si (111) crystallite size |
|---|---|---|---|---|---|---|---|
| Comparative Example 1 | 83.5 | 78.0 | 6.5 | Maximum peak at 102.5 eV, different structure from 102 eV | only 532.5 eV | - | amorphous |
| Comparative Example 2 | 78.6 | 83.5 | 6.5 | Maximum peak at 102.5 eV, different structure from 102 eV | only near 532.5 eV | - | 8.5 nm |
| Comparative Example 3 | 86.6 | 90.2 | 6.5 | A<B | O1s, Maximum peak at 531 eV, peak at 528 eV, near 532.5 eV | 0.55 | amorphous |
| Comparative Example 4 | 87.8 | 90.2 | 6.5 | Maximum at 101 eV, lower valency as entirety | same as above | 0.55 | amorphous |
| Comparative Example 5 | 85.9 | 90.3 | 6.5 | Maximum peak shifted to 102.5 eV second strongest peak at 99.5 eV with disproportionation | same as above | 0.55 | amorphous |

(continued)

| | Retention until 100th cycle (%) | First efficiency (%) | Particle size [μm] | Comparison with peak A and peak B, and comparison with peak A and peak C | O1s, largest peak at 531 eV, peak at 528 eV, near 532.5 eV | Ratio G/H between Si(111) and $Li_2SiO_3$ (111) | Si (111) crystallite size |
|---|---|---|---|---|---|---|---|
| Example 1 | 92.5 | 90.2 | 6.5 | A>B, 0.5A≥C | same as above | 0.55 | amorphous |
| Example 2 | 93 | 90.3 | 6.5 | A>B, 0.5A≥C | same as above | 0.55 | amorphous |
| Example 3 | 90.9 | 90.3 | 6.5 | A>B, 0.5A≥C | same as above | 0.55 | amorphous |
| Example 4 | 90.2 | 90.2 | 6.5 | A>B, 0.5A=C | same as above | 1.52 | 7 nm |
| Example 5 | 91 | 90.2 | 6.5 | A>B, 0.5A≥C | same as above | 1.02 | 5 nm |
| Example 6 | 91.8 | 90.1 | 6.5 | A>B, 0.5A≥C | same as above | 0.66 | 4.0 nm |
| Example 7 | 92.2 | 90.3 | 6.5 | A>B, 0.5A≥C | same as above | 0.67 | 2.2 nm |
| Example 8 | 93.1 | 90.2 | 6.5 | A>B, 0.5A≥C | same as above | 0.56 | 1.1 nm |
| Example 9 | 91.8 | 90.2 | 4 | A>B, 0.5A≥C | same as above | 0.55 | amorphous |
| Example 10 | 92.1 | 90.1 | 5.5 | A>B, 0.5A≥C | same as above | 0.55 | amorphous |
| Example 11 | 93.4 | 90.2 | 9 | A>B, 0.5A≥C | same as above | 0.55 | amorphous |
| Example 12 | 94.1 | 90.2 | 12 | A>B, 0.5A≥C | same as above | 0.55 | amorphous |
| Example 13 | 93.5 | 90.1 | 15 | A>B, 0.5A≥C | same as above | 0.55 | amorphous |
| Example 14 | 91.9 | 90.2 | 17 | A>B, 0.5A≥C | same as above | 0.55 | amorphous |

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A negative electrode active material, comprising negative electrode active material particles, wherein

the negative electrode active material particles contain silicon oxide particles coated with a carbon layer, and the silicon oxide particles contain $Li_2SiO_3$, and a Si2p spectrum obtained by XPS analysis has a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A.

2. The negative electrode active material according to claim 1, wherein the negative electrode active material has three or more phase structures.

3. The negative electrode active material according to claim 1 or 2, wherein the negative electrode active material particles are composed of three or more phase structures from a surface layer to an inside, the phase structures having, in an O1s spectrum obtained by XPS analysis, an outermost layer having a strongest peak near 531 eV, a lower portion having a peak near 528 eV, and a lower portion having a peak near 532.5 eV.

4. The negative electrode active material according to claim 3, wherein, in the O1s spectrum obtained by the XPS analysis of the negative electrode active material particles, the peak obtained near 532.5 eV splits into two peaks near 532 eV and near 533 eV.

5. The negative electrode active material according to any one of claims 1 to 4, wherein, before the negative electrode active material particles are charged and discharged, the negative electrode active material particles have a peak derived from a Si (111) crystal plane obtained by X-ray diffraction using Cu-K$\alpha$ ray, a crystallite size corresponding to the crystal plane is 5.0 nm or less, and a ratio G/H of an intensity G of the peak derived from the Si (111) crystal plane relative to an intensity H of a peak derived from a $Li_2SiO_3$ (111) crystal plane satisfies the following formula (1),

$$0.4 \leq G/H \leq 1.0 \quad ...(1).$$

6. The negative electrode active material according to any one of claims 1 to 5, wherein a median size of the negative electrode active material particles is 5.5 um or more and 15 um or less.

7. The negative electrode active material according to any one of claims 1 to 6, wherein the carbon layer has a portion in which the carbon layer is present as a compound state with oxygen on an outermost layer.

8. A method for manufacturing a negative electrode active material, the method comprising steps of:

   producing negative electrode active material particles by a method comprising steps of:

   producing silicon oxide particles;
   coating the silicon oxide particles with a carbon layer;
   inserting lithium into the silicon oxide particles coated with the carbon layer by an oxidation-reduction method; and
   subjecting the silicon oxide particles with inserted lithium to a thermal treatment to form silicon oxide particles containing $Li_2SiO_3$; and

   manufacturing a negative electrode active material by using the produced negative electrode active material particles,
   wherein, by regulating a temperature in inserting the lithium and a temperature of the thermal treatment, the silicon oxide particles are set to have, in a Si2p spectrum obtained by XPS analysis, a strongest peak A near 102 eV, a second strongest peak B corresponding to a low-valent Si compound having a valency of any one of 1 to 3 near 100 eV, and a peak C of Si: 0-valency obtained near 99 eV having an intensity of less than or equal to half of an intensity of the peak A.

[FIG. 1]

[FIG. 2]

[FIG. 3]

Example 3
Si2p

Inside

Surface

Binding energy [eV]

[FIG. 4]

Comperative
Example 1
Si2p

Inside

Surface

Binding energy [eV]

[FIG. 5]

Comperative Example 2
Si2p

[FIG. 6]

Comperative Example 3
Si2p

[FIG. 7]

[FIG. 8]

EP 4 379 863 A1

[FIG. 9]

[FIG. 10]

# EP 4 379 863 A1

[FIG. 11]

[FIG. 12]

## INTERNATIONAL SEARCH REPORT

| | International application No. |
|---|---|
| | **PCT/JP2022/026370** |

**A.    CLASSIFICATION OF SUBJECT MATTER**

*H01M 4/48*(2010.01)i; *H01M 4/36*(2006.01)i
FI:    H01M4/48; H01M4/36 C; H01M4/36 A

According to International Patent Classification (IPC) or to both national classification and IPC

**B.    FIELDS SEARCHED**

Minimum documentation searched (classification system followed by classification symbols)

H01M4/48; H01M4/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2016-192385 A (SONY CORP.) 10 November 2016 (2016-11-10) | 1-8 |
| A | JP 2021-61101 A (SHIN ETSU CHEM. CO., LTD.) 15 April 2021 (2021-04-15) | 1-8 |
| A | WO 2017/179457 A1 (SHIN ETSU CHEM. CO., LTD.; MITSUI CHEMICALS, INC.) 19 October 2017 (2017-10-19) | 1-8 |
| A | WO 2007/063765 A1 (MATSUSHITA ELECTRIC INDUSTRIAL CO., LTD.) 07 June 2007 (2007-06-07) | 1-8 |

☐ Further documents are listed in the continuation of Box C.            ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/026370**

| Patent document cited in search report | | | Publication date (day/month/year) | Patent family member(s) | | | Publication date (day/month/year) |
|---|---|---|---|---|---|---|---|
| JP | 2016-192385 | A | 10 November 2016 | US | 2018/0047981 | A1 | |
| | | | | WO | 2016/157743 | A1 | |
| JP | 2021-61101 | A | 15 April 2021 | WO | 2021/065200 | A1 | |
| WO | 2017/179457 | A1 | 19 October 2017 | US | 2019/0115586 | A1 | |
| | | | | EP | 3444877 | A1 | |
| | | | | CN | 109075330 | A | |
| | | | | KR | 10-2018-0134887 | A | |
| WO | 2007/063765 | A1 | 07 June 2007 | US | 2009/0047577 | A1 | |
| | | | | EP | 1956674 | A1 | |
| | | | | CN | 101322279 | A | |
| | | | | KR | 10-2008-0074157 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001185127 A
- JP 2002042806 A
- JP 2006164954 A
- JP 2006114454 A
- JP 2009070825 A
- JP 2008282819 A
- JP 2008251369 A

- JP 2008177346 A
- JP 2007234255 A
- JP 2009212074 A
- JP 2009205950 A
- JP H06325765 A
- JP 2015156355 A

**Non-patent literature cited in the description**

- *Journal of BATTERY ASSOCIATION OF JAPAN "Denchi,* 01 May 2010, 10
- **A. HOHL ; T. WIEDER ; P. A. VAN AKEN ; T. E. WEIRICH ; G. DENNINGER ; M. VIDAL ; S. OSWALD ; C. DENEKE ; J. MAYER ; H. FUESS.** *J. Non-Cryst. Solids,* 2003, vol. 320, 255
- **V. KAPAKLIS.** *J. Non-Crystalline Solids,* 2008, vol. 354, 612
- **MARIKO MIYACHI ; HIRONORI YAMAMOTO ; HIDEMASA KAWAI.** *J. Electrochem. Soc.,* 2007, vol. 154 (4), A376-A380

- **M. YAMADA ; A. INABA ; A. UEDA ; K. MATSUMOTO ; T. IWASAKI ; T. OHZUKU.** *J. Electrochem. Soc.,* 2012, vol. 159, A1630
- **TAEAHN KIM ; SANGJIN PARK ; SEUNG M. OH.** *J. Electrochem. Soc.,* 2007, vol. 154, A1112-A1117
- **HYE JIN KIM ; SUNGHUN CHOI ; SEUNG JONG LEE ; MYUNG WON SEO ; JAE GOO LEE ; ERHAN DENIZ ; YONG JU LEE ; EUN KYUNG KIM ; JANG WOOK CHOI.** *Nano Lett.,* 2016, vol. 16, 282-288